# EUROPÄISCHE PATENTANMELDUNG

(11) **EP 4 141 722 A1**
(43) Veröffentlichungstag der Anmeldung: **01.03.2023**
(21) Anmeldenummer: 21193450.0
(22) Anmeldetag: 27.08.2021
(51) Int. Cl.: G06F 21/64

(54) **SICHERES BETREIBEN EINER INDUSTRIELLEN STEUERUNGSVORRICHTUNG ZUSAMMEN MIT EINEM AI-MODUL**

(71) Anmelder: Siemens Aktiengesellschaft, 80333 München (DE)
(72) Erfinder: Fischer, Renè, 09212 Limbach-Oberfrohna (DE); Frank, Johannes, 81673 München (DE); Kessler, Alexander, 90408 Nürnberg (DE); Soler Garrido, Josep, 41080 Sevilla (ES); Thon, Ingo, 85630 Grasbrunn (DE)

(57) **Zusammenfassung**

Die Erfindung betrifft ein Verfahren zum sicheren Betreiben einer industriellen Steuerungsvorrichtung zusammen mit einem AI-Modul zur Verarbeitung mindestens eines AI-Datensatzes mittels eines zweistufigen Entschlüsselungsverfahrens.

## Beschreibung

Die Erfindung betrifft ein Verfahren zum sicheren Betreiben einer industriellen Steuerungsvorrichtung zusammen mit einem AI-Modul zur Verarbeitung mindestens eines AI-Datensatzes mittels eines zweistufigen Entschlüsselungsverfahrens sowie eine Vorrichtung zur Ausführung eines industriellen Automatisierungsprogramms unter Verwendung eines AI-Datensatzes.

In vielen Anwendungsbereichen in der Industrieautomatisierung sollen Verfahren, Algorithmen oder Modelle, die auf künstlicher Intelligenz, Artificial Intelligence, kurz AI, oder auf maschinellem Lernen basieren, in industrielle Automatisierungsprozesse integriert werden. Solche AI-Verfahren oder AI-Erweiterungen enthalten oftmals eine Vielzahl von schützenswerten Daten, beispielsweise Know-How über industrielle Prozesse, geistiges Eigentum an Modellen etc. Neben dem Bestreben, solche Daten vor Kopie oder Nachahmung zu schützen, insbesondere AI-Modelle oder AI-Algorithmen oder generell AI-Applikationen zu lizenzieren und vor unberechtigter Verwendung zu schützen, besteht auch das Interesse, rechtmäßig verwendete Software vor Cyberangriffen zu schützen.

Vor diesem Hintergrund ist es eine Aufgabe der vorliegenden Erfindung einen Schutz bei der Verwendung von AI-Datensätzen in einem industriellen Automatisierungsumfeld zu erhöhen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum sicheren Betreiben einer industriellen Steuerungsvorrichtung zusammen mit einem AI-Modul zur Verarbeitung mindestens eines AI-Datensatzes, insbesondere eines künstliche Intelligenz-basierten Modells oder einer künstliche-Intelligenz-basierten Applikation, wobei der AI-Datensatz zur Laufzeit der industriellen Steuerungsvorrichtung mittels eines zweistufigen Entschlüsselungsverfahrens unter Einsatz eines durch eine Modulherstellereinheit des AI-Moduls bereitgestellten kryptographischen Modul-Entschlüsselungsschlüssels eines kryptographischen Modul-Schlüsselpaares und unter Einsatz eines mittels des kryptographischen Modul-Entschlüsselungsschlüssels entschlüsselten kryptographischen AI-Entschlüsselungsschlüssel eines kryptographischen AI-Schlüsselpaares auf dem AI-Modul entschlüsselt wird und in entschlüsselter Form ausgeführt wird.

Das AI-Modul zeichnet sich dadurch aus, dass ein separater Prozessor vorgesehen ist, der unabhängig ist vom Prozessor der industriellen Steuerungsvorrichtung, beispielsweise einer PLC. Dabei kann das AI-Modul als eigenständige Hardware ausgestaltet sein oder in die Hardware der industriellen Steuerungsvorrichtung integriert sein. Beispielsweise kann das AI-Modul als physisches Modul neben der Steuerung auf einer Hutschiene eingebaut sein. Das AI-Modul kann auch als ein Plugin-Modul in bestehenden Steuerungsgeräten eingebaut werden.

Das AI Modul bildet eine eigene, von der Steuerung getrennte Logik mit eigenem Prozessor, einer AI-Verarbeitungseinheit und eigenen Speichern. Das AI-Modul erhält Input-Daten von der Steuerung und/ oder von weiteren Komponenten der Automatisierungsanlage wie beispielsweise Sensoren. Das AI-Modul liefert Output-Daten an die Steuerung und/ oder direkt an weitere Komponenten der Automatisierungsanlage wie beispielsweise Ventile o.ä.

Das AI-Modul dient zur Verarbeitung des AI-Datensatzes. Dabei handelt es sich beispielsweise um einen AI-Algorithmus, ein AI-Modell oder generell eine AI-Applikation. Die AI-Applikation führt beispielsweise eine Text- oder Spracheoder Mustererkennung aus, um daraus anhand des AI-Algorithmus oder AI-Modells einen Befehlssatz an die industrielle Steuerung bereitzustellen. Das AI-basierte Verfahren wird durch die industrielle Steuerung zusammen mit dem AI-Modul zur Laufzeit durchgeführt. Dafür wird der AI-Datensatz zur Laufzeit auf dem AI-Modul verarbeitet. Der AI-basierte Datensatz ist dafür auf dem AI-Modul verfügbar, jedoch mit einem zweistufigen Sicherheitsverfahren geschützt.

Der AI-Datensatz liegt auf einem Speicher des AI-Moduls in verschlüsselter Form vor. Dafür wurde er mit einem kryptographischen AI-Verschlüsselungsschlüssel eines kryptographischen AI-Schlüsselpaares verschlüsselt und in verschlüsselter Form dem AI-Modul bereitgestellt und auf dem Speicher des AI-Moduls hinterlegt. Der zugehörige AI-Entschlüsselungsschlüssel, der ein Entschlüsseln des AI-Datensatzes ermöglicht, liegt jedoch auf dem AI-Modul nicht direkt vor. Stattdessen wird dieser dem AI-Modul auch wiederum nur in verschlüsselter Form bereitgestellt. Dafür wurde der AI-Entschlüsselungsschlüssel mit einem kryptographischen Modul-Verschlüsselungsschlüssel eines kryptographischen Modul-Schlüsselpaares verschlüsselt und der industriellen Steuerung in verschlüsselter Form bereitgestellt.

Das kryptographischen AI-Schlüsselpaar wird vorzugsweise durch eine AI-Entwicklungseinheit, die beispielsweise den AI-Datensatz separat als Produkt vertreibt, bereitgestellt und insbesondere ferner vorzugsweise auch durch diese generiert. Dieser Einheit liegt auch der Modul-Verschlüsselungsschlüssel vor. Die industrielle Steuerung stellt dem AI-Modul den verschlüsselten AI-Verschlüsselungsschlüssel bereit und das AI-Modul entschlüsselt diesen mittels des Modul-Entschlüsselungsschlüssel. Dieser Modul-Entschlüsselungsschlüssel ist auf dem AI-Modul verfügbar und vorzugsweise mit weiteren Sicherheitsmaßnahmen vor Zugriff geschützt.

Das kryptographische Modul-Schlüsselpaar wird vorzugsweise seitens eines Modul-Herstellers erzeugt, beispielsweise durch eine Modul-Herstellereinheit, die auch die Firmware für das AI-Modul erzeugt und dem AI-Modul bereitstellt. Beispielsweise ist eine Entwicklungs- oder Konfigurationsumgebung vorgesehen zum Einrichten des AI-Moduls.

Beispielsweise liest das AI-Modul beim Booten seine Firmware aus den nicht-flüchtigen Speicher aus und lädt sie in den Hauptspeicher, beispielsweise einen RAM-Speicher. In diesem Schritt wird beispielsweise zugleich der Modul-Entschlüsselungsschlüssel aus dem nicht-flüchtigen Speicher extrahiert und beispielsweise ebenfalls im Hauptspeicher oder in einem Modul-internen Speicher, beispielsweise einem internen SRAM Speicher, abgelegt.

Die industrielle Steuerung, die letztlich die Ausführung der AI-Applikation steuert, stellt beispielsweise dem AI-Modul den mit dem Modul-Verschlüsselungsschlüssel verschlüsselten und somit gesicherten AI-Entschlüsselungsschlüssel bereit. Beispielsweise wird der gesicherte kryptographische AI-Entschlüsselungsschlüssel dem AI-Prozessor des AI-Moduls bereitgestellt. Dafür wird beispielsweise ein Rückwandbus genutzt, der die industrielle Steuerung und AI-Modul verbindet. Beispielsweise werden Kommunikationsprotokolle basierend auf Profinet oder Modbus eingesetzt. Ferner können andere Netzwerke im Zusammenspiel mit dem AI-Modul, beispielsweise versehen mit einem Anschluss für industrielle Kommunikation, für die Kommunikation verwendet werden. Für die Kommunikation ist ein spezieller Kommunikationschip auf dem AI-Modul vorgesehen.

Es wird auf dem AI-Modul zunächst der AI-Entschlüsselungsschlüssel mit dem Modul-Entschlüsselungsschlüssel entschlüsselt. Dies erfolgt beispielsweise durch einen AI-Prozessor des AI-Moduls. Darauffolgend wird der AI-Datensatz mit dem entschlüsselten AI-Entschlüsselungsschlüssel entschlüsselt. Auch dies erfolgt beispielsweise durch den AI-Prozessor. Der entschlüsselte AI-Datensatz wird beispielsweise in den Hauptspeicher geladen und zur Ausführung gebracht.

Das vorgeschlagene Verfahren hat den vorteilhaften Effekt, dass ein Zugriff auf den AI-Datensatz nicht möglich ist, wenn nur der Inhalt des AI-Moduls mit dessen Speicherbereichen bekannt ist. Erst das Zusammenwirken von AI-Modul mit der industriellen Steuerung führt dazu, dass eine Entschlüsselung und damit beispielsweise ein Auslesen möglich ist. Somit wird einerseits der rechtmäßige und gewollte Zugriff eines Nutzers der Steuerung mit AI-Modul aufwandsarm ermöglicht, da das AI-Modul ohnehin zusammen mit der Steuerung für die AI-Automatisierungsaufgabe eingesetzt wird. Andererseits ist ein ungewollter Zugriff auf den AI-Datensatz, auch wenn dieser bereits verschlüsselt auf dem AI-Modul verfügbar ist, verhindert, da der auf dem AI-Modul gespeicherte Modul-Entschlüsselungsschlüssel nicht für die Entschlüsselung des AI-Datensatzes geeignet ist.

Zugleich ist auch die Verfügbarkeit des verschlüsselten AI-Datensatzes auf der industriellen Steuerung oder einem Engineeringsystem zur Einrichtung der industriellen Steuerung unkritisch, da hier der passende AI-Entschlüsselungsschlüssel nur in verschlüsselter Form vorliegt und nur in Kenntnis des auf dem AI-Modul verfügbaren Modul-Entschlüsselungsschlüssels entschlüsselt werden kann.

Somit wird vorteilhafterweise erreicht, dass eine AI-Applikation, die den AI-Datensatz verwendet, nur auf der dafür vorgesehenen Kombination aus Steuerung und AI-Modul eingesetzt werden kann.

Entwickler von AI-Applikationen, die ihre Produkte oftmals unabhängig vom AI-Modulhersteller vermarkten, können mit dem vorgeschlagenen Verfahren in Zusammenarbeit mit dem AI-Modulhersteller sicherstellen, dass ihre Produkte nur durch den Nutzer der industriellen Steuerung, an den sie beispielsweise das AI-Produkt verkaufen, genutzt werden kann, selbst wenn Zugriff auf eine Speicherkarte des AI-Moduls besteht und dort bereits der AI-Datensatz hinterlegt ist. Somit wird ein Schutz des Know-Hows sowie des sensitiven AI-Datensatzes oder ferner ein Lizenzierungsmodell ermöglicht unabhängig vom Schutz, den ein Gerätehersteller des AI-Moduls oder der Steuerung vorsieht.

AI-Gerätehersteller haben zugleich eine Möglichkeit, die Nutzung ihrer Produkte auf die Kombination mit AI-Produkten ausgewählter AI-Entwickler einzuschränken.

Zudem ist vorteilhafterweise kein spezieller kryptographischer Schutz-Mechanismus auf der industriellen Steuerungsvorrichtung notwendig. Aufwändige Lösungen wie Trusted Platform Modules, kurz TPM, oder USB-Dongles zur Umsetzung eines Lizenzierungsmodells mit einem Nutzer der Steuerung entfallen.

Das auf der Steuerung laufende Automatisierungsprogramm wird durch das vorgeschlagene Verfahren mit der auf dem AI-Modul laufenden Applikation gekoppelt. Somit wird das System insgesamt weniger anfällig für Fehler aufgrund von einer vom PLC-Programm nicht erwarteten AI-Applikation.

Zugleich können bereits auf einer Steuerung vorgesehene Sicherheits-Einrichtungen zum Schutz von Know-How oder zur lizenzierten Verwendung von Software o.ä. unverändert bestehen bleiben und werden durch die vorgeschlagene zusätzliche Sicherheits-Schicht nicht beeinträchtigt. Somit kann das vorgeschlagene Verfahren beispielsweise mit Zertifikats-Managern, die auf einer PLC vorgesehen sind, und eine rechtmäßige Verwendung der PLC - völlig unabhängig vom AI-Modul - sicherstellen, kombiniert werden.

Gemäß einer Ausgestaltung wird dem AI-Modul durch die Modulherstellereinheit ferner eine Modulfirmware bereitgestellt. Vorteilhaft wird die Firmware auf einer Station in einer Programmiersprache erstellt und abgelegt, in ein Firmware-Programm kompiliert und als ausführbare Datei auf dem AI-Modul gespeichert.

Gemäß einer Ausgestaltung werden der kryptographische Modul-Entschlüsselungsschlüssel und/ oder die Firmware auf einem nichtflüchtigen Speicher des AI-Moduls gespeichert. Beispielsweise wir ein Flash-Memory eingesetzt. Beispielsweise wird vom AI-Modul-Hersteller eine initiale Version der Firmware auf dem Gerät hinterlegt, die später aktualisiert werden kann, beispielsweise durch aktualisierte Firmware-Images, die ein Nutzer der AI-Moduls herunterladen kann. Beispielsweise wird der Firmware-Code beim Booten vom Prozessor der AI-Moduls über eine serielle Schnittstelle, ein Serial Peripheral Interface, kurz SPI, empfangen.

Gemäß einer Ausgestaltung werden der auf dem nicht-flüchtigen Speicher gespeicherte kryptographische Modul-Entschlüsselungsschlüssel und/ oder die gespeicherte Firmware mittels eines trusted-computing-Verfahrens, insbesondere eines Secure-Boot-Verfahrens, gesichert hinterlegt. Da der Inhalt eines nicht-flüchtigen Speichers leicht auslesbar ist, werden die darauf befindlichen Daten und insbesondere die Firmware sowie kryptographisches Schlüsselmaterial gesichert. Dabei kommen vorzugsweise Secure-Boot-Verfahren zum Einsatz, die mittels Signaturmechanismen überprüfen, ob die Teile der Software, die das AI-Modul zum Booten verwendet, vertrauenswürdig sind bzw. ob deren Signaturen verifizierbar sind. Ferner sind sichere Firmware Update Prozesse vorteilhaft, für die kryptographisches Schlüsselmaterial eingesetzt wird, das auf besser gesicherten Teilen des Systems, beispielsweise read-only-Speichern innerhalb des AI-Prozessor-Chips hinterlegt ist. In Varianten wird unterschiedliches Schlüsselmaterial verwendet, um einerseits die Firmware und andererseits den Modul-Entschlüsselungsschlüssel zu sichern. Somit wird ermöglicht, dass ein Schlüssel zum Absichern des Modul-Entschlüsselungsschlüssels unverändert verwendet werden kann, wenn beispielsweise ein Firmware-Update erfolgt ist oder dass andersherum Schlüssel zurückgerufen oder erneuert werden können, ohne die Firmware zu beeinflussen.

Gemäß einer Ausgestaltung wird das kryptographische Modul-Schlüsselpaar mit dem kryptographischen Modul-Entschlüsselungsschlüssel und einem kryptographischen Modul-Verschlüsselungsschlüssels durch die Modulherstellereinheit generiert. Dafür kommen vorzugsweise asymmetrische kryptographische Methoden zum Generieren von Schlüsselpaaren aus privaten und öffentlichen Schlüsseln zum Einsatz, beispielsweise RSA-Verfahren oder Verfahren basierend auf elliptischen Kurven.

Gemäß einer Ausgestaltung generiert eine AI-Entwicklungseinheit das kryptographische AI-Schlüsselpaar mit dem kryptographischen AI-Entschlüsselungsschlüssel und einem kryptographischen AI-Verschlüsselungsschlüssel und sichert den AI-Datensatz mit dem kryptographischen AI-Verschlüsselungsschlüssel. Wiederum kommen vorzugsweise Verfahren zum Erzeugen asymmetrischer Schlüsselpaare zum Einsatz.

Gemäß einer Ausgestaltung wird dem AI-Modul der mit dem kryptographischen AI-Verschlüsselungsschlüssel gesicherte AI-Datensatz bereitgestellt. Beispielsweise geschieht dies, indem dieser einem End-Nutzer der industriellen Steuerung und/ oder des AI-Moduls bereitgestellt wird, beispielsweise über einen App-Store, der in einem Cloud-Server gehostet wird, und über den der Nutzer die AI-Applikation erwerben kann. Der AI-Datensatz kann ferner dem AI-Modul auch direkt bereitgestellt werden, beispielsweise indem der verschlüsselte AI-Datensatz im Austausch mit dem Modul-Verschlüsselungsschlüssel der Entwicklungsumgebung des AI-Moduls übermittelt wird. Diese kann dann den verschlüsselten AI-Datensatz auf einem Speicher, beispielsweise einer SD-Karte des AI-Moduls hinterlegen.

Gemäß einer Ausgestaltung wird der AI-Entwicklungseinheit durch die Modulherstellereinheit der kryptographische Modul-Verschlüsselungsschlüssel für die Sicherung des kryptographischen AI-Entschlüsselungsschlüssels bereitgestellt. Vorzugsweise teilt der AI-Modul-Hersteller den Modul-Verschlüsselungsschlüssel mit denjenigen AI-Applikationsentwicklern, die in die Lage versetzt werden sollen, für die Geräte des AI-Modul-Herstellers, der beispielsweise aber nicht zwangsläufig auch der Hersteller der industriellen Steuerung ist, AI-Applikationen bereitzustellen.

Gemäß einer Ausgestaltung wird einer Einrichtungseinheit der industriellen Steuerung durch die AI-Entwicklungseinheit ein mit dem kryptographischen Modul-Verschlüsselungsschlüssel gesicherter kryptographischer AI-Entschlüsselungsschlüssel des kryptographischen AI-Schlüsselpaares bereitgestellt. Beispielsweise ist die Einrichtungseinheit ein Engineeringtool oder eine Konfigurationsumgebung oder eine Programmierumgebung, um das Automatisierungsprogramm für die Steuerung zu erstellen. Beispielsweise wird das TIA Portal der Firma Siemens verwendet. Die Einrichtungseinheit wird ferner auch zur Einrichtung des AI-Moduls verwendet, insbesondere zu dessen Konfiguration sowie um Software und Applikationen darauf zu verteilen.

Gemäß einer Ausgestaltung stellt die Einrichtungseinheit der industriellen Steuerung ein Automatisierungsprogramm für eine Ansteuerung der industriellen Steuerungsvorrichtung, einschließlich der Ausführung von Programmen auf dem AI-Modul, bereit. Beispielsweise wird durch die Einrichtungseinheit das Automatisierungsprogramm auf die industrielle Steuerung verteilt und zugleich auch der gesicherte kryptographische AI-Entschlüsselungsschlüssel. In anderen Ausführungen kann der Schlüssel auch zu einem späteren Zeitpunkt auf die Steuerung geladen werden.

Der gesicherte kryptographische AI-Entschlüsselungsschlüssel kann auf verschiedene Arten auf der industriellen Steuerungsvorrichtung gespeichert werden. Beispielsweise wird er unabhängig vom Steuerungsprogramm verteilt und gespeichert. Somit kann vorteilhaft ein Schlüsselupdate, beispielsweise aufgrund eines Updates einer AI-Applikation, durchgeführt werden, ohne den Steuerungsprogrammcode verändern zu müssen.

Beispielsweise erfolgt das Verteilen und Empfangen des gesicherten kryptographischen AI-Entschlüsselungsschlüssels über standardisierte Kommunikationsschnittstellen von Steuerungen oder PLCs, beispielsweise über OPC-UA oder TCP/IP Kommunikationsmodule oder über Parameter zur Aktivierung/Deaktivierung von Funktionen des AI Moduls, sog. parameter record data objects.

Ferner erfolgt beispielsweise ein Importieren des gesicherten kryptographischen AI-Entschlüsselungsschlüssels mittels eines Zertifikatemanagers, der vorzugsweise auf der Einrichtungseinheit der industriellen Steuerungsvorrichtung für das Management weiterer Schlüssel oder Zertifikate ohnehin verfügbar ist. Über diesen wird der gesicherte kryptographische AI-Entschlüsselungsschlüssel dann der industriellen Steuerungsvorrichtung zugeordnet.

Es ist ferner möglich, den gesicherten kryptographischen AI-Entschlüsselungsschlüssel mittels eines separaten Systems, beispielsweise eines Industrie-PCs, mit dem die industrielle Steuerungsvorrichtung über ein Automatisierungs-Netzwerk verbunden ist, über gängige Kommunikationsschnittstellen und - Protokolle auf die Steuerung zu schreiben.

In besonders kritischen Sicherheitsumgebungen kann ferner eine zusätzliche Absicherung für eine sichere Übertragung und Speicherung des gesicherten kryptographischen AI-Entschlüsselungsschlüssels vorgesehen sein. Die Sicherung des kryptographischen AI-Entschlüsselungsschlüssels aufgrund der Verschlüsselung mit dem Modul-Verschlüsselungsschlüssel sorgt jedoch ohnehin dafür, dass selbst bei Kenntnis des gesicherten kryptographischen AI-Entschlüsselungsschlüssels der AI-Datensatz noch nicht entschlüsselt werden kann.

Gemäß einer Ausgestaltung wird das kryptographische Modul-Schlüsselpaar spezifisch für eine Hardware des AI-Moduls generiert. Somit wird vorteilhaft vermieden, dass ein Speicherinhalt eines AI-Moduls auf ein weiteres AI-Modul kopiert wird, auf dem die Ausführung nicht oder beispielsweise nur nach erfolgter Kaufpreiszahlung möglich sein soll.

Gemäß einer Ausgestaltung generiert die Modulherstellereinheit ein Signatur-Schlüsselpaar mit einem öffentlichen Signaturschlüssel und einem privaten Signaturschlüssel und stellt den öffentlichen Signaturschlüssel dem AI-Modul bereit. Somit werden einerseits der Modul-Entschlüsselungsschlüssel auf dem AI-Modul gespeichert, andererseits der öffentliche Signaturschlüssel. Der private Signaturschlüssel wird zu keiner Zeit geteilt, sondern liegt, vorzugsweise gesichert, auf Seiten des AI-Modulherstellers vor.

Gemäß einer Ausgestaltung wird durch die Modulherstellereinheit ein Hardware-Charakteristikum als Modul-Fingerprint-Datensatz erstellt und mit dem privaten Signaturschlüssel signiert und als signiertes Modul-spezifisches Token der AI-Entwicklungseinheit bereitgestellt. Das Hardware-Charakteristikum kann ein Device-Fingerprint sein, der in der Herstellungsphase des AI-Moduls generiert wird. Beispielsweise fließen in das Hardware-Charakteristikum Werte einer MAC-Adresse von Netzwerkschnittstellen oder kennzeichnende und individuelle oder einzigartige Eigenschaften der Prozessoren des AI-Moduls oder spezifische zu diesem Zweck in einem Onetime-programmable-Speicherabschnitt hinterlegte Werte. Beispielsweise werden Hashwerte einer oder mehrerer der genannten Werte für die Bildung des Hardware-Charakteristikums verwendet. Durch das Signieren mit dem privaten Signaturschlüssel wird die Integrität und Authentizität des Device-Fingerprint-Datensatzes überprüfbar gemacht.

Das Token wird vorzugsweise so wie der AI-Entschlüsselungsschlüssel von der AI-Entwicklungseinheit an die industrielle Steuerungsvorrichtung über deren Einrichtungseinheit bereitgestellt. Die Steuerung stellt das Token dann zur Laufzeit dem AI-Modul, insbesondere dem AI-Prozessor, zur Verfügung. Das AI-Modul ermittelt eigenständig ebenfalls den Modul-Fingerprint-Datensatz anhand der auf dem AI-Modul verfügbaren Hardware-Charakteristika. Mit dem öffentlichen Schlüssel kann überprüft werden, ob das Token vom AI-Modulhersteller generiert wurde. Ferner kann geprüft werden, ob der übermittelte Device-Fingerprint-Datensatz unverändert ist bzw. mit dem selbst erstellten übereinstimmt. Erst dann wird das Ausführen des AI-Datensatzes erlaubt.

Somit kann vorteilhaft ein einheitlicher Modul-Entschlüsselungsschlüssel genutzt werden und die Kopplung des AI-Datensatzes an eine spezifische Hardware erfolgt unabhängig von der Ver- und Entschlüsselung des AI-Entschlüsselungsschlüssels über die Prüfung des Modulspezifischen Tokens.

Gemäß einer Ausgestaltung wird der Einrichtungseinheit der industriellen Steuerung durch die AI-Entwicklungseinheit ein mit dem kryptographischen Modul-Verschlüsselungsschlüssel gesichertes Bündel aus dem kryptographischen AI-Entschlüsselungsschlüssel des kryptographischen AI-Schlüsselpaares und dem signierten Modul-spezifisches Token bereitgestellt. Dies verhindert einen unberechtigten Zugriff auf das Token und bewirkt zugleich keinen zusätzlichen Aufwand auf Seiten des AI-Entwicklers.

Die Erfindung betrifft ferner ein AI-Modul zur Ausführung eines industriellen Automatisierungsprogramms unter Verwendung eines AI-Datensatzes, aufweisend
- eine Kommunikationsschnittstelle zu einer industriellen Steuerung zum Erhalten eines ausführbaren Automatisierungsprogrammcodes sowie eines mit einem kryptographischen Modul-Verschlüsselungsschlüssel eines kryptographischen Modul-Schlüsselpaares gesicherten kryptographischen AI-Entschlüsselungsschlüssels eines kryptographischen AI-Schlüsselpaares,
- einen nicht-flüchtigen Speicher mit einem gespeicherten ausführbaren Firmware-Code sowie einem kryptographischen Modul-Entschlüsselungsschlüssels des kryptographischen Modul-Schlüsselpaares,
- einen Modulspeicher mit einem mittels eines kryptographischen AI-Verschlüsselungsschlüssel des kryptographischen AI-Schlüsselpaares gesicherten AI-Datensatz,
- einen Hauptspeicher zum Laden des ausführbaren Firmware-Codes,
- einen AI-Prozessor zum Entschlüsseln des gesicherten kryptographischen AI-Entschlüsselungsschlüssels mittels des kryptographischen Modul-Entschlüsselungsschlüssels sowie zum Entschlüsseln des gesicherten AI-Datensatz mittels des entschlüsselten kryptographischen AI-Entschlüsselungsschlüssels,
- den Hauptspeicher, ferner ausgebildet zum Laden des entschlüsselten AI-Datensatzes, so dass das industrielle Automatisierungsprogramm unter Verwendung des AI-Datensatzes auf dem AI-Modul ausführbar ist.

Vorteilhaft muss der Modulspeicher nicht aufwändig gesichert sein wie beispielsweise der nicht-flüchtige Speicher, da auf dem Modulspeicher der AI-Datensatz nur in verschlüsselter Form vorliegt.

Das vorgeschlagene Verfahren sowie AI-Modul ermöglichen einen sicheren und einfachen Einsatz von AI-Applikationen in einer industriellen Steuerung in Kombination mit einem AI-Modul. AI-Algorithmen oder AI-Modelle werden vorteilhaft vor unberechtigtem Zugriff geschützt, sodass Wettbewerbsnachteile, Angriffe auf kritisches Prozess-Know-How sowie gezielte Angriffe auf die Funktionstüchtigkeit von Anlagen, insbesondere durch Kompromittierung der AI-Applikationen, verhindert werden. Zugleich ermöglichen das vorgeschlagene Verfahren sowie AI-Modul ein umfassendes und robustes Schutzkonzept in typischen Industrieanlagen-Szenarien, in welchen eine Anbindung an einen Cloud Server oder sonstige externe Kommunikation nicht vorgesehen sind. Einerseits ist dafür das Schlüsselmaterial entsprechend verteilt, sodass die Endkunden die Steuerung sowie das AI-Modul direkt in der Anlage in Betrieb nehmen können, andererseits ist die Sicherheit dennoch gewährleistet, auch wenn eine Überprüfung auf Zugriff auf Speicherinhalte oder Reverse Engineering Maßnahmen nach Auslieferung der Produkte für den Gerätehersteller und/ oder den Applikations-Entwickler nicht mehr möglich ist.

Aufwändige und rein Vertrauens-basierte vertragliche Regelungen zum Umfang des Einsatzes von AI-Applikationen auf Steuerungen mit AI-Modul oder von AI-Modulen mit Steuerungen zur Ausführung von AI-Applikationen entfallen vorteilhafterweise.

Die Erfindung wird nachfolgend anhand von Ausführungsbeispielen mit Hilfe der Figuren näher erläutert. Es zeigen:
- Figur 1: eine schematische Darstellung zur Veranschaulichung der Verteilung des kryptographischen Schlüsselmaterials in einem System umfassend eine industrielle Steuerungsvorrichtung und ein AI-Modul gemäß einem ersten Ausführungsbeispiel der Erfindung;
- Figur 2: eine schematische Darstellung eines Betriebs einer industriellen Steuerungsvorrichtung zusammen mit einem AI-Modul gemäß dem ersten Ausführungsbeispiel der Erfindung;
- Figur 3: eine schematische Darstellung zur Veranschaulichung der Verteilung des kryptographischen Schlüsselmaterials in einem System umfassend eine industrielle Steuerungsvorrichtung und ein AI-Modul gemäß einem zweiten Ausführungsbeispiel der Erfindung.

In den Figuren sind funktionsgleiche Elemente mit denselben Bezugszeichen versehen, sofern nichts anderes angegeben ist.

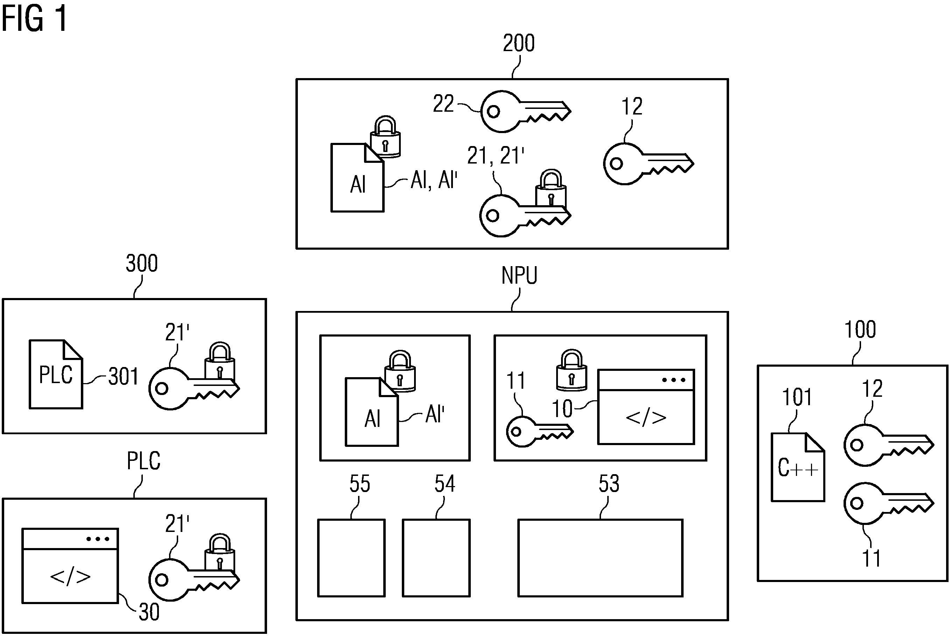

In Figur 1 ist veranschaulicht, wie kryptographisches Schlüsselmaterial verteilt wird und verteilt zwischen Komponenten und Rollen im Zusammenhang mit einem System umfassend eine industrielle Steuerung und ein AI-Modul vorliegt.

Gezeigt sind eine industrielle Steuerungsvorrichtung PLC und ein AI-Modul NPU. Ferner ist eine Einrichteinheit 300 gezeigt, bei der es sich beispielsweise um ein Tool zum Einrichten der industriellen Steuerungsvorrichtung PLC mit gängigen Engineering-Softwaremitteln handelt. Hier wird der PCL-Programmcode 301 erstellt, der als ausführbarer Automatisierungsprogrammcodes 30 auf die Steuerungsvorrichtung PLC geladen wird. Dies erfolgt in einer Engineeringphase.

Ferner wurde das AI-Modul NPU in einer Herstellungsphase durch den Gerätehersteller des AI-Moduls eingerichtet mittels einer Modulherstellereinheit, die beispielsweise eine Firmware Build Station ist. Es handelt sich beispielsweise um einen PC mit Software zum Erstellen der Modulfirmware 101. Während der Herstellungsphase des AI-Moduls NPU wird diese Modulfirmware 101 als ausführbare Datei 10 auf das AI-Modul übertragen.

Neben der Rolle des Herstellers des AI-Moduls NPU mit der Modulherstellereinheit 100 sowie der Rolle des Endkunden mit Einrichtungseinheit 300 der Steuerung PLC gibt es zudem die Rolle des AI-Applikations-Entwicklers, der einen AI-Datensatz AI erstellt, welcher auf dem AI-Modul NPU benötigt wird, um eine AI-Applikation in einem Automatisierungsprogramm ausführen zu können. Beispielsweise sind im AI-Datensatz AI Modelle enthalten, die bei einer AI-Applikation zugrunde gelegt werden, um anhand von über die Steuerung PLC gelieferten Daten, beispielsweise über aktuelle Zustände, Stellsignale basierend auf den AI-Modellen berechnen zu können. Im AI-Datensatz AI können ferner AI-Algorithmen enthalten sein, die beispielsweise auf ein Prozessabbild, das das AI-Modul von der Steuerung erhält, oder Teile davon angewendet werden, um Parameter zu berechnen, die von dem AI-Modul selbst oder von der Steuerung für eine Aktualisierung des Prozessabbildes verwendet werden. Ferner werden beispielsweise auch von externen Quellen, z.B. einer Kamera, einem Mikrofon, etc., Daten an das AI-Modul geliefert. Insbesondere aktiviert dann die Steuerung PLC die Verarbeitung der externen Daten im AI Modul.

Gemäß dem ersten Ausführungsbeispiel wirken Gerätehersteller und Applikations-Entwickler zusammen, um ein sicheres Betreiben der Steuerung PLC zusammen mit dem AI-Modul NPU durch den Endkunden in der Automatisierungsanlage zu ermöglichen. Dafür erzeugt der Gerätehersteller ein kryptographisches Modul-Schlüsselpaar aus Modul-Verschlüsselungsschlüssel 12 und Modul-Entschlüsselungsschlüssel 11. Den Modul-Verschlüsselungsschlüssel 12 übermittelt der Gerätehersteller des AI-Moduls mittels eines beliebigen, vorzugsweise sicheren, Kommunikationskanals an den Applikations-Entwickler.

Der Applikations-Entwickler erzeugt ein kryptographisches AI-Schlüsselpaar aus AI-Verschlüsselungsschlüssel 22 und AI-Entschlüsselungsschlüssel 21. Mit dem AI-Verschlüsselungsschlüssel 22 verschlüsselt der Applikationsentwickler, beispielsweise mittels auf der AI-Entwicklungseinheit 200 implementierten Kryptoalgorithmen, beispielsweise asymmetrischen Verschlüsselungsalgorithmen, den AI-Datensatz AI. Dieser liegt dann als gesicherter AI-Datensatz AI' vor und wird von der AI-Entwicklungseinheit 200 nur in dieser gesicherten Form nach außen weitergegeben.

Mit dem Modul-Verschlüsselungsschlüssel 12 wird der AI-Entschlüsselungsschlüssel 21 verschlüsselt, ebenfalls mit Krypto-Mitteln der AI-Entwicklungseinheit 200.

Der Modul-Entschlüsselungsschlüssel 11 wird durch den ModulHersteller in einer sicheren Umgebung während des Herstellungsprozesses auf einem nicht-flüchtigen Speicher des AI-Moduls abgespeichert und es werden Secure-Boot-Mechanismen vorgesehen, um auch den Speicher oder die weitere Verwendung des Speicherinhalts gegen unrechtmäßiges Auslesen oder Kopieren abzusichern.

Mit dem gesicherten Hinterlegen des Modul-Entschlüsselungsschlüssels 11, der Verschlüsselung des AI-Entschlüsselungsschlüssels 21 sowie der Verschlüsselung des AI-Datensatzes sind die Grundlagen für eine sichere Verwendung von industrieller Steuerungskomponente PLC in Kooperation mit AI-Modul NPU gelegt. Es erfolgt nun eine Verteilung des verschlüsselten AI-Entschlüsselungsschlüssels 21' an den Steuerung-Endkunden, der diesen auf der Steuerung deployed. Außerdem wird über den Steuerungs-Endkunden auch der verschlüsselte AI-Datensatz AI' auf dem AI-Modul NPU gespeichert. Auch für diese Übermittlung werden nach Möglichkeit gesicherte Kommunikationskanäle genutzt.

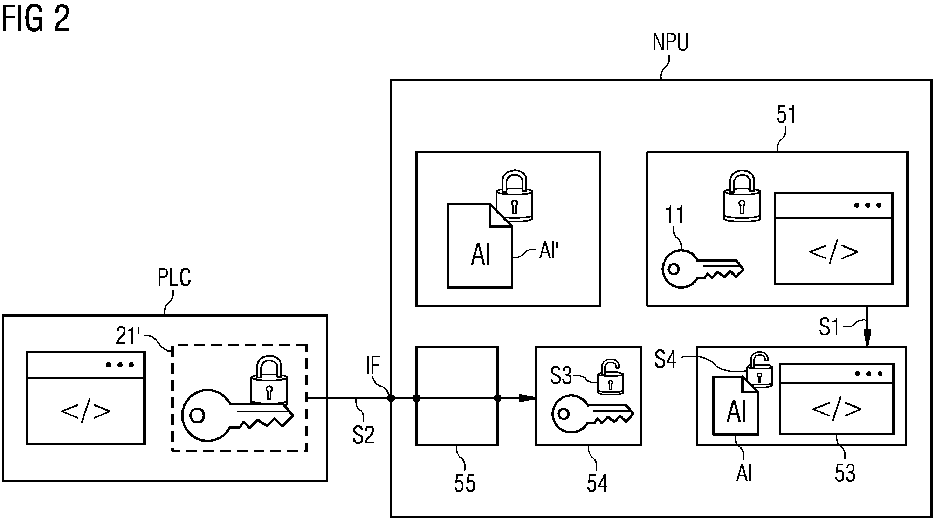

Mit dem so verteilten und hinterlegten Schlüsselmaterial kann nun das zweistufige Entschlüsselungsverfahren im Betrieb der Steuerung genutzt werden. Dieses wird anhand von Figur 2 erläutert.

Beim Booten S1 liest das AI-Modul die sichere Firmware aus dem nicht-flüchtigen Speicher 51 aus und lädt sie auf dem Hauptspeicher 53 des Gerätes, einem RAM-Speicher. Dafür kann geheimes Entschlüsselungsmaterial zum Einsatz kommen, das innerhalb des AI-Prozessors 54 gesichert ist (nicht abgebildet), beispielsweise ein privater Schlüssel mit einem passenden Bootmechanismus in einem Read-Only Bereich oder eine Hardwareunterstützung. Zudem wird der Modul-Entschlüsselungsschlüssel 11 aus dem nicht-flüchtigen Speicher extrahiert und vorzugsweise auf einem internen SRAM-Speicher angelegt (nicht dargestellt).

Die industrielle Steuerungsvorrichtung PLC initiiert ein Übertragen S2 des verschlüsselten AI-Entschlüsselungsschlüssels 21' an den AI-Prozessor 54 über eine Kommunikationsschnittstelle IF und mittels eines Kommunikations-Chips 55 des AI-Moduls NPU. Als Übertragungsmittel wird hier beispielsweise ein Netzwerk basierend auf Profinet oder generell ein industrielles Kommunikationsprotokoll verwendet.

Der AI-Prozessor 54 extrahiert den verschlüsselten AI-Entschlüsselungsschlüssel 21' durch Entschlüsselung S3 mittels des aus dem nicht-flüchtigen Speicher 51 extrahierten Modul-Entschlüsselungsschlüssel 11, sodass der AI-Entschlüsselungsschlüssel 21 für die Entschlüsselung S4 des gesicherten AI-Datensatzes AI' zur Verfügung steht. Diese Entschlüsselung S4 wird ebenfalls auf dem AI-Modul ausgeführt. Der entschlüsselte AI-Datensatz AI wird im Hauptspeieher 53 geladen und für die Ausführung des Programmcodes auf dem AI-Modul eingesetzt.

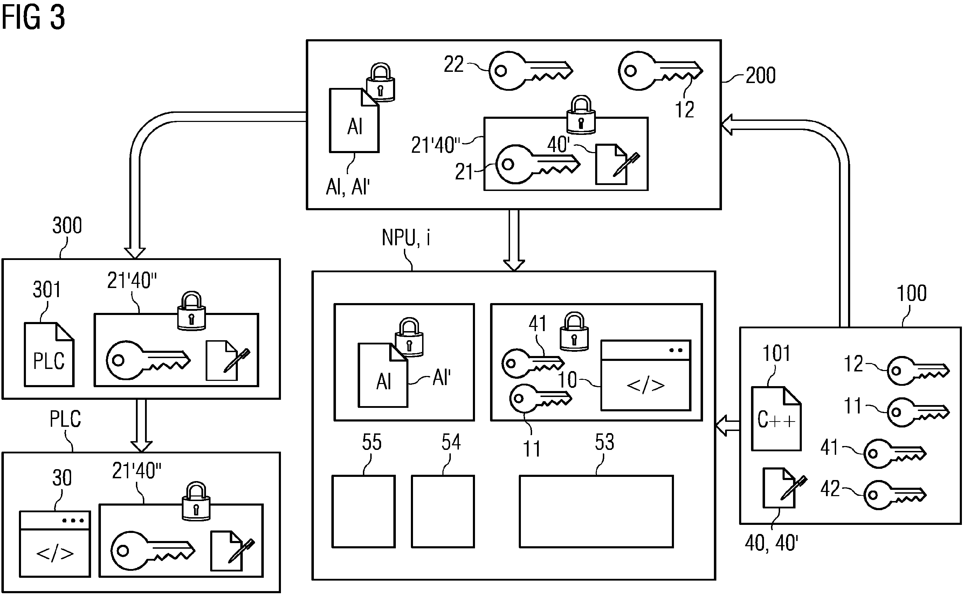

Gemäß einem zweiten Ausführungsbeispiel der Erfindung wird eine Kopplung des AI-Datensatzes an die konkrete Hardware i, auf der dieser einsetzbar sein soll, ermöglicht. Dies wird anhand von Figur 3 gezeigt. Dafür wird zum Zeitpunkt der Herstellung des AI-Moduls durch den Gerätehersteller ein Hardware-Fingerprint 40 eines konkreten AI-Moduls generiert, der charakteristisch und möglichst einzigartig für die Hardware i des späteren AI-Moduls ist. Es werden zudem ein privater Signaturschlüssel 42 und ein öffentlicher Signaturschlüssel 41 generiert. Mit dem privaten Signaturschlüssel 42 wird ein signiertes Modul-spezifisches Token 40' erstellt, wobei übliche kryptographische Signaturmechanismen zum Einsatz kommen.

Nur der öffentliche Signaturschlüssel 41 wird auf dem AI-Modul hinterlegt, der private Signaturschlüssel 42 wird geheim gehalten.

Neben dem Modul-Verschlüsselungsschlüssel 12 wird das signierte Modul-spezifische Token 40' an den ApplikationsEntwickler übermittelt. Auf einer AI-Entwicklungseinheit 200, einer Applikations-Entwicklungs- oder Verteil-Plattform des AI-Applikations-Entwicklers, werden das signierte Modul-spezifische Token 40' und der AI-Entschlüsselungsschlüssel 21 vorzugsweise gemeinsam mit dem Modul-Verschlüsselungsschlüssel 12 gesichert und als gesichertes Bündel 21'40" an die Einrichtungseinheit 300 der industriellen Steuerung PLC verteilt.

Zur Laufzeit der Steuerung PLC stellt diese das Bündel 21'40" dem AI-Modul NPU bereit und es wird zusätzlich eine Signatur-Überprüfung durchgeführt. Dabei wird der Device-Fingerprint 40 des eingesetzten AI-Moduls NPU auf der konkreten Hardware i ermittelt. Handelt es sich um die gleiche Hardware, so stimmen die Fingerprints überein. Für den Abgleich wird analog zum ersten Ausführungsbeispiel das Bündel 21'40" mit dem Modul-Entschlüsselungsschlüssel 11 entschlüsselt. Außerdem wird mit dem öffentlichen Signaturschlüssel 41 der Fingerprint 40 aus dem Token 40' extrahiert. Somit wird einerseits die Authentizität überprüft, also ob der Signaturersteller mit dem übereinstimmt, der aufgrund des öffentlichen Signaturschlüssels 41 bekannt ist, sowie zudem die Integrität des Fingerprints 40, also deren Unversehrtheit und Übereinstimmung mit dem selbst ermittelten Fingerprint 40. Die Ausführung der AI-Applikation auf dem AI-Modul erfolgt vorzugsweise nur, wenn die Fingerprints übereinstimmen. In diesem Fall erfolgt die Entschlüsselung des gesicherten AI-Datensatzes AI' und dessen Ausführung analog zum ersten Ausführungsbeispiel.

Der Endkunde der Steuerung kann sich beim Einsatz der AI-Applikation in Kombination mit dem AI-Modul somit sicher sein, dass die Anwendung der AI-Applikation für die vorliegende Hardware i gedacht war. Dies reduziert die Gefahr des Einsatzes von mit der Steuerung inkompatiblen AI-Applikationen. Der AI-Applikations-Entwickler hat Gewissheit, dass seine Applikationen nur mit der entsprechenden Hardware i eingesetzt werden und auch der Gerätehersteller kann sichergehen, dass nicht beliebige AI-Applikationen auf seiner Hardware zur Ausführung kommen. Somit können Gerätehersteller und Applikations-Entwickler ein Lizenzierungsmodell für ihre jeweiligen Produkte umsetzen. Zudem ermöglicht das Verfahren eine Geheimhaltung des durch einen Applikations-Entwickler aufwändig entwickelten AI-Know-Hows, insbesondere von Modellen und Algorithmen, auch in Szenarien, in denen Steuerungen, AI-Module und AI-Applikationen von verschiedenen Herstellern oder Anbietern kombiniert werden.

In Varianten werden durch den Gerätehersteller des AI-Moduls mehrere Token an den Applikationsentwickler verteilt, um den Einsatz auf mehreren unterschiedlichen Geräten zu ermöglichen.

## Patentansprüche

1. Verfahren zum sicheren Betreiben einer industriellen Steuerungsvorrichtung (PLC) zusammen mit einem AI-Modul (NPU) zur Verarbeitung mindestens eines AI-Datensatzes (AI), insbesondere eines künstliche Intelligenz-basierten Modells oder einer künstliche-Intelligenz-basierten Applikation, wobei der AI-Datensatz (AI) zur Laufzeit der industriellen Steuerungsvorrichtung (PLC) mittels eines zweistufigen Entschlüsselungsverfahrens unter Einsatz eines durch eine Modulherstellereinheit (100) des AI-Moduls bereitgestellten kryptographischen Modul-Entschlüsselungsschlüssels (11) eines kryptographischen Modul-Schlüsselpaares (11, 12) und unter Einsatz eines mittels des kryptographischen Modul-Entschlüsselungsschlüssels (11) entschlüsselten kryptographischen AI-Entschlüsselungsschlüssel (21) eines kryptographischen AI-Schlüsselpaares (21,22) auf dem AI-Modul entschlüsselt wird und in entschlüsselter Form ausgeführt wird.

2. Verfahren nach Anspruch 1, wobei dem AI-Modul (NPU) durch die Modulherstellereinheit (100) ferner eine Modulfirmware (101) bereitgestellt wird.

3. Verfahren nach Anspruch 1 oder 2, wobei der kryptographische Modul-Entschlüsselungsschlüssel (11) und/ oder die Firmware auf einem nichtflüchtigen Speicher (51) des AI-Moduls (NPU) gespeichert werden.

4. Verfahren nach einem der vorstehenden Ansprüche, wobei der auf dem nicht-flüchtigen Speicher (51) gespeicherte kryptographische Modul-Entschlüsselungsschlüssel (11) und/ oder die gespeicherte Modulfirmware (101) mittels eines trusted-computing-Verfahrens, insbesondere eines Secure-Boot-Verfahrens, gesichert hinterlegt werden.

5. Verfahren nach einem der vorstehenden Ansprüche, wobei das kryptographische Modul-Schlüsselpaar (11, 12) mit dem kryptographischen Modul-Entschlüsselungsschlüssel (11) und einem kryptographischen Modul-Verschlüsselungsschlüssels (12) durch die Modulherstellereinheit (100) generiert wird.

6. Verfahren nach einem der vorstehenden Ansprüche, wobei eine AI-Entwicklungseinheit (200) das kryptographische AI-Schlüsselpaar (21,22) mit dem kryptographischen AI-Entschlüsselungsschlüssel (21) und einem kryptographischen AI-Verschlüsselungsschlüssel (22) generiert und den AI-Datensatz (AI) mit dem kryptographischen AI-Verschlüsselungsschlüssel (22) sichert.

7. Verfahren nach einem der vorstehenden Ansprüche, wobei dem AI-Modul (NPU) der mit dem kryptographischen AI-Verschlüsselungsschlüssel (22) gesicherte AI-Datensatz (AI') bereitgestellt wird.

8. Verfahren nach einem der vorstehenden Ansprüche, wobei der AI-Entwicklungseinheit (200) durch die Modulherstellereinheit (100) der kryptographische Modul-Verschlüsselungsschlüssel (12) für die Sicherung des kryptographischen AI-Entschlüsselungsschlüssels (21) bereitgestellt wird.

9. Verfahren nach einem der vorstehenden Ansprüche, wobei einer Einrichtungseinheit (300) der industriellen Steuerung (PLC) durch die AI-Entwicklungseinheit (200) ein mit dem kryptographischen Modul-Verschlüsselungsschlüssel (12) gesicherter kryptographischer AI-Entschlüsselungsschlüssel (21') des kryptographischen AI-Schlüsselpaares (21, 22) bereitgestellt wird.

10. Verfahren nach einem der vorstehenden Ansprüche, wobei die Einrichtungseinheit (300) der industriellen Steuerung (PLC) ein Automatisierungsprogramm für eine Ansteuerung der industriellen Steuerungsvorrichtung (PLC), einschließlich der Ausführung von Programmen auf dem AI-Modul (NPU), bereitstellt.

11. Verfahren nach einem der vorstehenden Ansprüche, wobei das kryptographische Modul-Schlüsselpaar (11, 12) spezifisch für eine Hardware (i) des AI-Moduls (NPU) generiert wird.

12. Verfahren nach einem der vorstehenden Ansprüche, wobei die Modulherstellereinheit (100) ein Signatur-Schlüsselpaar (41, 42) mit einem öffentlichen Signaturschlüssel (41) und einem privaten Signaturschlüssel (42) generiert und den öffentlichen Signaturschlüssel (41) dem AI-Modul (NPU) bereitstellt.

13. Verfahren nach einem der vorstehenden Ansprüche, wobei durch die Modulherstellereinheit (100) ein Hardware-Charakteristikum als Modul-Fingerprint-Datensatz (40) erstellt wird und mit dem privaten Signaturschlüssel (42) signiert wird und als signiertes Modul-spezifisches Token (40') der AI-Entwicklungseinheit (200) bereitgestellt wird.

14. Verfahren nach einem der vorstehenden Ansprüche, wobei der Einrichtungseinheit (300) der industriellen Steuerung (PLC) durch die AI-Entwicklungseinheit (200) ein mit dem kryptographischen Modul-Verschlüsselungsschlüssel gesichertes Bündel (21'40") aus dem kryptographischen AI-Entschlüsselungsschlüssel (21) des kryptographischen AI-Schlüsselpaares und dem signierten Modul-spezifisches Token (40') bereitgestellt wird.

15. AI-Modul (NPU) zur Ausführung eines industriellen Automatisierungsprogramms unter Verwendung eines AI-Datensatzes (AI), aufweisend
- eine Kommunikationsschnittstelle (IF) zu einer industriellen Steuerung (PLC) zum Erhalten eines ausführbaren Automatisierungsprogrammcodes (30) sowie eines mit einem kryptographischen Modul-Verschlüsselungsschlüssel (12) eines kryptographischen Modul-Schlüsselpaares (11, 12) gesicherten kryptographischen AI-Entschlüsselungsschlüssels (21') eines kryptographischen AI-Schlüsselpaares (21,22),
- einen nicht-flüchtigen Speicher (51) mit einem gespeicherten ausführbaren Firmware-Code (10) sowie einem kryptographischen Modul-Entschlüsselungsschlüssels (11) des kryptographischen Modul-Schlüsselpaares (11, 12),
- einen Modulspeicher (52) mit einem mittels eines kryptographischen AI-Verschlüsselungsschlüssel (22) des kryptographischen AI-Schlüsselpaares (21,22) gesicherten AI-Datensatz (AI') ,
- einen Hauptspeicher (53) zum Laden des ausführbaren Firmware-Codes (10),
- einen AI-Prozessor (54) zum Entschlüsseln des gesicherten kryptographischen AI-Entschlüsselungsschlüssels (21') mittels des kryptographischen Modul-Entschlüsselungsschlüssels (11) sowie zum Entschlüsseln des gesicherten AI-Datensatz (AI') mittels des entschlüsselten kryptographischen AI-Entschlüsselungsschlüssels (21),
- den Hauptspeicher (53), ferner ausgebildet zum Laden des entschlüsselten AI-Datensatzes (AI), so dass das industrielle Automatisierungsprogramm unter Verwendung des AI-Datensatzes (AI) auf dem AI-Modul (NPU) ausführbar ist.
